# EUROPEAN PATENT APPLICATION

(11) **EP 2 869 568 A1**
(43) Date of publication of application: **06.05.2015**
(21) Application number: 14187213.5
(22) Date of filing: 30.09.2014
(51) Int. Cl.: H04N 7/18, G08B 13/196

(54) **E-map based intuitive video searching system and method for surveillance systems**

(30) Priority: 05.11.2013 US 201314071910
(71) Applicant: Honeywell International Inc., Morristown, NJ 07962-2245 (US)
(72) Inventor: Deng, Yi, Morristown, NJ New Jersey 07962-2245 (US); Song, Wei, Morristown, NJ New Jersey 07962-2245 (US); Zhang, Pengfei, Morristown, NJ New Jersey 07962-2245 (US); Lin, Lin, Morristown, NJ New Jersey 07962-2245 (US)
(74) Representative: Houghton, Mark Phillip

(57) **Abstract**

An e-map based intuitive video searching system and method for surveillance systems is provided. Methods include displaying an electronic map of a monitored region on a user interface device, receiving user input for selecting an area in the monitored region, and responsive to the received user input, displaying information related to the selected area on the user interface device.

## Description

### FIELD

The present invention relates generally to surveillance systems. More particularly, the present invention relates to an e-map based intuitive video searching system and method for surveillance systems.

### BACKGROUND

Known surveillance systems include distributed systems that are designed for large-scale, multi-level management and cross-functioning networks. For example, some known surveillance systems can manage different types of systems, including, but not limited to, analog video surveillance systems, digital video surveillance systems, and intrusion and access control systems, and can seamlessly integrate each of these systems into a single, powerful security management interface.

While known surveillance systems provide many advantages, such systems also present various concerns to a user regarding the systems' usability and the user experience associated with such systems. For example, many users desire a system that lets the user easily and quickly find a target device, such as a video surveillance camera or other data capture device in a monitored region, as well as the device's associated video. Many users also desire a system that pushes the video most desired by the user to him and that enhances operation efficiency for switching between a map operation and video monitoring.

In view of the above, there is a continuing, ongoing need for an improved surveillance system.

### BRIEF DESCRIPTION OF THE DRAWINGS

FIG. 1 is a method in accordance with disclosed embodiments;
FIG. 2 is a block diagram of a system for executing the method of FIG. 1 and others in accordance with disclosed embodiments;
FIG. 3 is a view of an interactive window displayed on a viewing screen of a graphical user interface for displaying an e-map in accordance with disclosed embodiments;
FIG. 4 is a view of an interactive window displayed on a viewing screen of a graphical user interface for displaying a dotted and highlighted selected area on an e-map in accordance with disclosed embodiments;
FIG. 5 is a view of an interactive window displayed on a viewing screen of a graphical user interface for displaying a lined and highlighted selected area on an e-map in accordance with disclosed embodiments;
FIG. 6 is a view of an interactive window displayed on a viewing screen of a graphical user interface for displaying a framed and highlighted selected area on an e-map in accordance with disclosed embodiments; and
FIG. 7 is a view of an interactive window displayed on a viewing screen of a graphical user interface in a video monitoring mode in accordance with disclosed embodiments.

### DETAILED DESCRIPTION

While this invention is susceptible of an embodiment in many different forms, there are shown in the drawings and will be described herein in detail specific embodiments thereof with the understanding that the present disclosure is to be considered as an exemplification of the principles of the invention. It is not intended to limit the invention to the specific illustrated embodiments.

Embodiments disclosed herein include an e-map based intuitive video searching system and method for surveillance systems. For example, some embodiments disclosed herein provide a user with a system, method, and user interface that the user can operate based on his knowledge of a monitored region rather than device names and locations that have been memorized and/or cross-referenced.

In accordance with some embodiments, systems and methods disclosed herein can provide a user interface that displays a powerful e-map, for example, an electronic map of a monitored region displayed on the user interface. Systems and methods disclosed herein can also receive user input for selecting one or more areas on the e-map and can identify the selected areas by displaying an indication of the selected areas on the e-map. For example, in some embodiments, the user interface can highlight the selected areas on the displayed e-map and/or display a dot, line, or frame on and/or around the selected area.

Based on received user input that identifies or selects an area on the e-map, systems and methods disclosed herein can retrieve and organize information that is relevant to the selected area and events that occurred within the selected area. Then, systems and methods disclosed herein can present the retrieved and organized information to the user, and the user can review this information. For example, in some embodiments, when an area on an e-map is selected, systems and methods disclosed herein can highlight and/or display views of the selected area and/or video data streams associated with target devices in the selected area.

In some embodiments, while the user is reviewing the information presented to him, systems and methods disclosed herein can also push to the user video that is related to the selected area and/or events that occurred within the selected area. The information and video presented and pushed to the user can provide the user with comprehensive information about the selected area and/or an event that occurred within the selected area.

In accordance with the above, systems and methods disclosed herein can display and play video data streams associated with target devices in an area selected by a user. For example, in some embodiments, after a user has selected an area on a displayed e-map, the systems and methods disclosed herein can receive user input to play video data streams associated with one or more target devices in the selected area. If the user input selects more video data streams than can be displayed on a current layout of the user interface, some systems and methods disclosed herein can present the selected video data streams on multiple pages or screens of the user interface, and the user can navigate between the various pages or screens to view all of the data streams of interest.

In accordance with the above, systems and methods disclosed herein can also facilitate a user locating a target device and retrieving video associated with the target device via the e-map displayed on a user interface. For example, the user can employ his knowledge regarding the layout and location of a monitored region to identify the target device via its geographical location on the e-map. That is, the user need not know the target device's name or the like to identify the device.

In accordance with the above, systems and methods disclosed herein can also provide a user with an efficient way to navigate between a map operation and video monitoring. For example, systems and methods disclosed herein can provide a user interface via which a user can easily, efficiently, and effectively navigate between viewing an e-map displayed on the user interface and viewing video data streams associated with target devices displayed on the e-map. In some embodiments, the e-map can be used for navigating the monitored region.

In some embodiments, the information and video data streams presented to a user via the user interface can relate to an event of interest, for example, an event that occurred in a selected area of a monitored region at a selected time. Accordingly, systems and methods disclosed herein can provide a user with comprehensive and multiple pieces of information about an event rather than merely presenting the user with a set of video data streams. Furthermore, systems and methods disclosed herein can present and display current video data streams to a user as well as other video data streams identified by systems and methods disclosed herein as relevant.

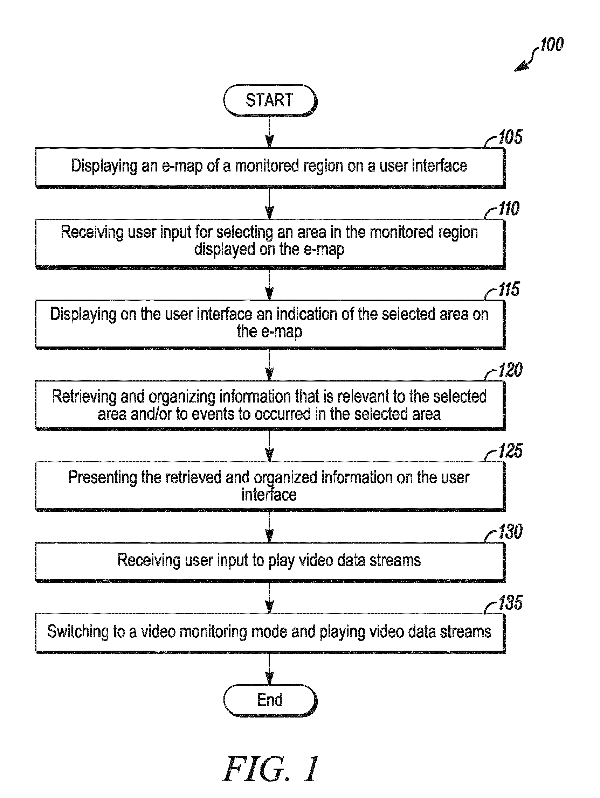

FIG. 1 is a method 100 in accordance with disclosed embodiments. As seen in FIG. 1, the method 100 can include displaying an e-map of a monitored region on a user interface as in 105. Then, the method 100 can include receiving user input for selecting an area in the monitored region displayed on the e-map as in 110.

Based on the received user input, the method 100 can include displaying on the user interface an indication of the selected area on the e-map as in 115. Based on the received user input, the method 100 can also include retrieving and organizing information that is relevant to the selected area and/or to events that occurred within the selected area as in 120. Then, the method 100 can include presenting the retrieved and organized information on the user interface as in 125. For example, in some embodiments, presenting the retrieved and organized information on the user interface as in 125 can include displaying views of the selected area and/or displaying video data streams associated with target devices in the selected area. In some embodiments, presenting the retrieved and organized information on the user interface as in 125 can include pushing to the user interface video data streams that are related to the selected areas and/or to events that occurred within the selected area.

In some embodiments, after the method 100 displays video data streams as in 125, the method 100 can include receiving user input to play the video data streams as in 130 and switching to a video monitoring mode to play the video data streams as in 135.

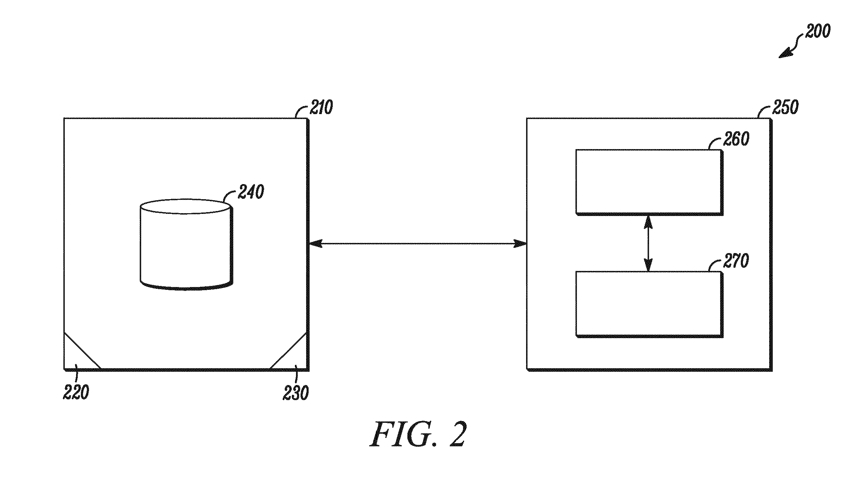

FIG. 2 is a block diagram of a system 200 for executing the method of FIG. 1 and others in accordance with disclosed embodiments. As seen in FIG. 2, the system 200 can include control circuitry 210, one or more programmable processors 220, and executable control software 230 as would be understood by those of skill in the art. The executable control software 230 can be stored on a transitory or non-transitory local computer readable medium, including, but not limited to, local computer memory, RAM, optical storage media, magnetic storage media, flash memory, and the like. In some embodiments, the control circuitry 210 can include a memory device 240.

An associated user interface device 250 can be in communication with the control circuitry 210, and a viewing screen 260 of the user interface device 250 can display interactive and viewing windows. In some embodiments, the user interface device 250 can include a multidimensional graphical user interface. In some embodiments, the user interface device 250 can include one or more input mechanisms 270, for example, a keypad or a mouse, that can receive user input.

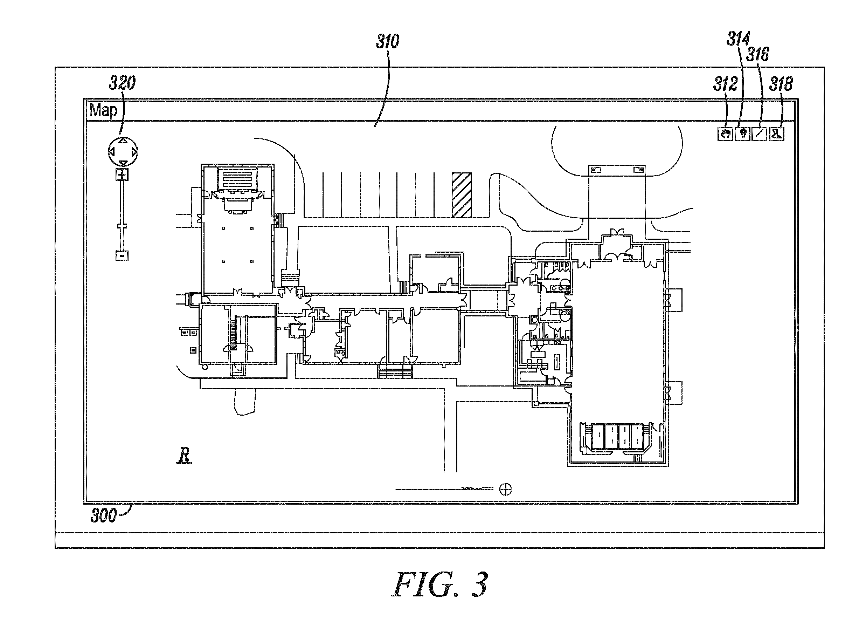

FIGs. 3-7 are views of interactive windows that can be displayed on the viewing screen 260 of the user interface device 250 in accordance with embodiments disclosed herein. However, the windows shown in FIGs. 3-8 are exemplary only, and those of skill in the art will understand that the features of the windows shown and described herein may be displayed by additional or alternate windows. Additionally, the windows shown and described herein can be displayed on any type of user interface device, for example, personal digital assistants, smart phones, and/or handheld devices.

As seen in FIG. 3, the window 300 can display an e-map 310 of a monitored region R. The window 300 can also display buttons or icons as would be understood by those of skill in the art, for example, an icon 312 for dragging tools, an icon 314 for pointing tools, an icon 316 for line drawing tools, an icon 318 for framing tools, and an icon 320 for e-map operating tools. In some embodiments, the e-map can be used for navigating the monitored region R.

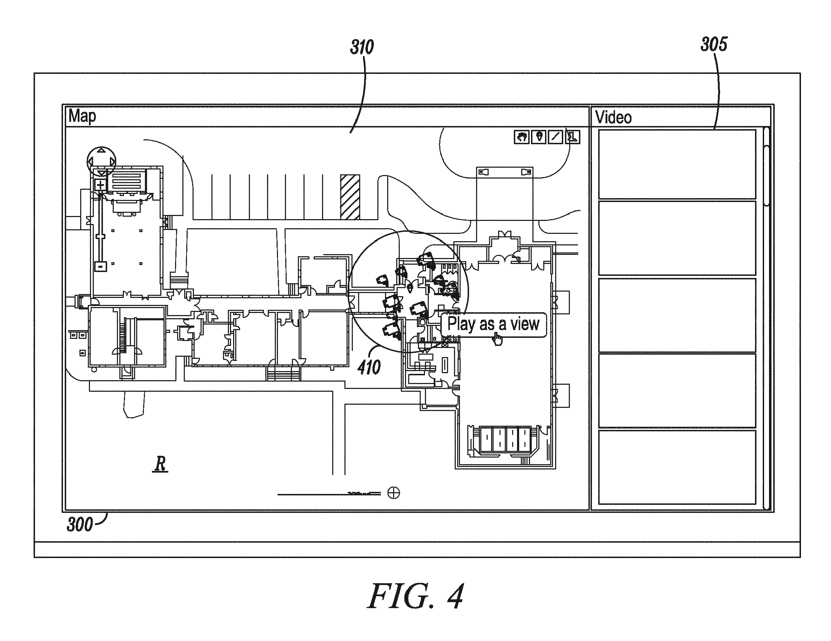

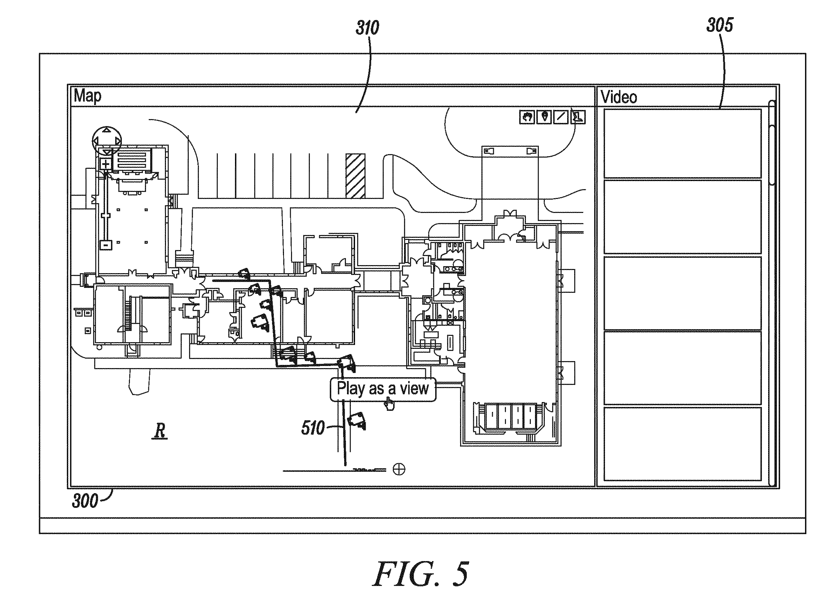

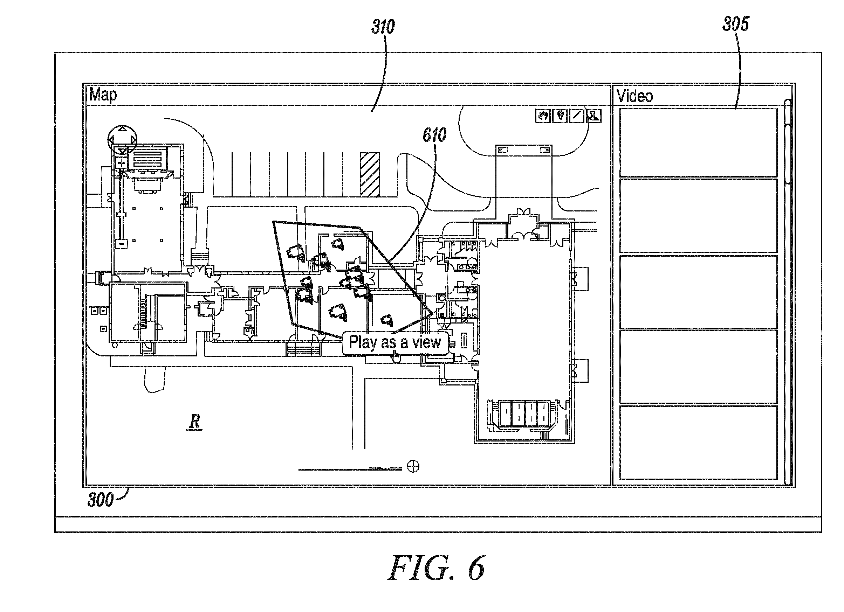

Using one or more of the icons, 312, 314, 316, 318, 320 and/or other user input devices, a user can provide user input to select an area on the e-map 310, for example, by dotting, lining, or framing a selected area on the e-map 310. Then, the selected area can be highlighted on the e-map 310. For example, FIG. 4 illustrates the window 300 and the e-map 310 with a dotted and highlighted selected area 410, FIG. 5 illustrates the window 300 and the e-map 310 with a lined and highlighted selected area 510, and FIG. 6 illustrates the window 300 and the e-map 310 with a framed and highlighted selected area 610.

As seen in each of FIGs. 4-6, when a selected area 410, 510, 610 is highlighted on the e-map 310, the e-map 310 can also display icons or other representations of target devices, for example, video surveillance cameras or other data capturing devices, that are located within in the selected area 410, 510, 610.

The window 300 can also include a sub-window 305 for displaying views and/or video data streams associated with each of the target devices in the selected area 410, 510, 610. In some embodiments, the views and/or video data streams that are displayed in the sub-window 305 can related to an event of interest. For example, a user can provide user input to indicate an event of interest and/or systems and methods disclosed herein can identify an event of interest based on the area on the e-map selected by the user input. Accordingly, the views and/or video data streams that are displayed in the sub-window 305 can include information retrieved, organized, recommended and/or pushed by the systems and methods disclosed herein and/or based on the selected area 410, 510, 610.

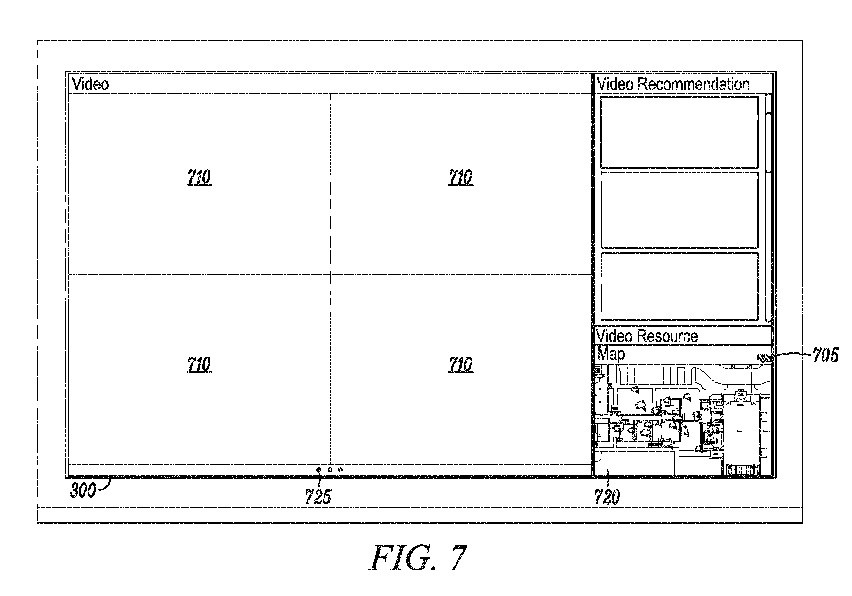

The window 300 can switch between a map operation mode and a video monitoring mode. For example, FIGs. 3-6 illustrate the window 300 in a map operation mode. However, FIG. 7 illustrates the window 300 in a video monitoring mode.

Systems and methods disclosed herein can receive user input for switching between the map operation mode and the video monitoring mode. For example, as seen in FIG. 7, in some embodiments, the window 300 can display a button or icon as would be understood by those of skill in the art, for example, an icon 705 for switching between the map operation mode and the video monitoring mode. In some embodiments, when a user provides input to play one or more video data streams, the window 300 can switch to the video monitoring mode.

As seen in FIG. 7, in the video monitoring mode, video data streams can be displayed and played in respective ones of video player subwindows 710. However, in some embodiments, even when in the video monitoring mode, the window 300 can still display the e-map 310 in a map sub-window 720.

When the user provides input to play more video data streams than can be displayed in the window 300 at a single time, the window 300 can present the selected video data streams on multiple pages and/or in a multi-screen layout. Then, the user can navigate between the pages and/or screens to view each of the video data streams. For example, the window 300 can include a button or icon as would be understood by those of skill in the art, for example, an icon 725 for navigating between the various pages and/or screens.

Although a few embodiments have been described in detail above, other modifications are possible. For example, the logic flows described above do not require the particular order described, or sequential order, to achieve desirable results. Other steps may be provided, or steps may be eliminated, from the described flows, and other components may be added to, or removed from, the described systems. Other embodiments may be within the scope of the invention.

From the foregoing, it will be observed that numerous variations and modifications may be effected without departing from the spirit and scope of the invention. It is to be understood that no limitation with respect to the specific system or method described herein is intended or should be inferred. It is, of course, intended to cover all such modifications as fall within the sprit and scope of the invention.

## Claims

1. A method comprising:
displaying an electronic map of a monitored region on a user interface device;
receiving user input for selecting an area in the monitored region; and
responsive to the received user input, displaying information related to the selected area on the user interface device.

2. The method of claim 1 wherein displaying the information related to the selected area on the user interface device includes displaying an indication of the selected area on the electronic map.

3. The method of claim 2 wherein displaying the indication of the selected area on the electronic map includes highlighting the selected area on the electronic map.

4. The method of claim 2 wherein displaying the indication of the selected area on the electronic map includes displaying a dot, line, or frame on or around the selected area.

5. The method of claim 1 wherein displaying information related to the selected area on the user interface device includes retrieving information relevant to the selected area or to an event that occurred or is occurring in the selected area.

6. The method of claim 1 wherein displaying information related to the selected area on the user interface device includes displaying a view of the selected area.

7. The method of claim 1 wherein displaying information related to the selected area on the user interface device includes displaying at least one video data stream associated with a device in the selected area.

8. The method of claim 7 wherein the device in the selected area includes a surveillance camera.

9. The method of claim 7 wherein displaying the at least one video data stream associated with the device in the selected area includes playing the at least one video data stream.

10. The method of claim 9 further comprising navigating between a map operation mode and a video monitoring mode.

11. The method of claim 7 further comprising displaying the at least one video data stream in a multi-screen layout and receiving user input for navigating between each page of the multi-screen layout.

12. The method of claim 1 wherein displaying information related to the selected area on the user interface device includes, responsive to the received user input, identifying additional information of interest and displaying the additional information of interest on the user interface device.

13. A method comprising:
displaying an electronic map of a monitored region on a user interface device;
receiving user input for selecting an area in the monitored region;
responsive to the received user input, retrieving information relevant to the selected area or to an event that occurred or is occurring in the selected area; and
displaying the information on the user interface device.

14. A system comprising:
a programmable processor; and
executable control software stored on a non-transitory computer readable medium,
wherein the programmable processor and the executable control software display an electronic map of a monitored region on a user interface device,
wherein the programmable processor and the executable control software receive user input for selecting an area in the monitored region, and
wherein, responsive to the received user input, the programmable processor and the executable control software, display information related to the selected area on the user interface device.

15. The system of claim 14 wherein the programmable processor and the executable control software displaying the information related to the selected area on the user interface device includes the programmable processor and the executable control software displaying an indication of the selected area on the electronic map.
